# EUROPÄISCHE PATENTSCHRIFT

(11) **EP 2 654 365 B1**
(45) Veröffentlichungstag und Bekanntmachung des Hinweises auf die Patenterteilung: **23.03.2016**
(21) Anmeldenummer: 12002649.7
(22) Anmeldetag: 16.04.2012
(51) Int. Cl.: H04W 12/06, H04W 48/08

(54) **Konfiguration eines Endgerätes für einen Zugriff auf ein leitungsloses Kommunikationsnetz**
Configuration of a terminal for access to a wireless communications network
Configuration d'un terminal pour l'accès à un réseau de communication sans fil

(43) Veröffentlichungstag der Anmeldung: 23.10.2013
(73) Patentinhaber: Vodafone Holding GmbH, 40213 Düsseldorf (DE)
(72) Erfinder: Schmidt, Ulrich, 44269 Dortmund (DE)
(74) Vertreter: Ring & Weisbrodt

(56) Entgegenhaltungen:
- EP-A1- 2 410 772
- US-A1- 2007 037 603
- ANTONIO DE LA OLIVA ET AL: "IEEE 802.21: Media independence beyond handover", COMPUTER STANDARDS AND INTERFACES, ELSEVIER SEQUOIA. LAUSANNE, CH, Bd. 33, Nr. 6, 16. März 2011 (2011-03-16), Seiten 556-564, XP028386003, ISSN: 0920-5489, DOI: 10.1016/J.CSI.2011.03.001 [gefunden am 2011-03-23]

## Beschreibung

Die vorliegende Erfindung betrifft ein Verfahren zum Konfigurieren eines Endgerätes für einen Zugriff auf ein erstes von einer Netzeinrichtung ausgebildetes leitungsloses Kommunikationsnetz.

Derartige Konfigurationen sind insbesondere erforderlich, damit Endgeräte, insbesondere mobile Endgeräte wie Mobilfunktelefone, Notebooks, Tablett-PCs oder dergleichen Endgeräte, auf ein gesichertes Funknetz, insbesondere ein gesichertes WLAN (WLAN: Wireless Local Area Network) zugreifen können, beispielsweise um über das Funknetz Internetinhalte nutzen zu können.

Da zur Vermeidung einer missbräuchlichen Nutzung ein von einer Netzeinrichtung, insbesondere von einem Wireless Access Point (WAP), ausgebildetes leitungsloses Kommunikationsnetz üblicherweise mit einem Kennwort geschützt ist, ist es erforderlich, dass ein Nutzer, der das leitungslose Kommunikationsnetz, beispielsweise für einen Zugang zum Internet mittels eines Endgerätes nutzen möchte, entsprechende Zugriffsdaten in das Endgerät eingibt und das Endgerät für einen Zugriff konfiguriert.

Um derzeit geltenden Sicherheitsanforderungen gerecht zu werden, sollte bei einer weit verbreiteten Authentifizierung mittels PSK (PSK: Pre-Shared-Key) ein für einen Zugriff auf ein von einer Netzeinrichtung ausgebildetes leitungsloses Kommunikationsnetz erforderliches Kennwort wenigstens sechszehn Zeichen umfassen. Hierbei besteht einerseits das Problem der korrekten Eingabe der Zeichenkette, damit eine spätere Authentifizierung erfolgreich verlaufen kann, andererseits besteht das Problem, dass eine öffentliche Bekanntgabe bzw. Weitergabe des Kennwortes oftmals nicht erwünscht ist. Zudem sind oftmals neben dem Kennwort weitere Angaben erforderlich, um sich bei einer Netzeinrichtung, für einen Zugriff auf das von dieser ausgebildete Kommunikationsnetz authentifizieren zu können, beispielsweise ein Netzwerknamen, die Art der Verschlüsselung und/oder Angaben bezüglich der MAC-Adresse (MAC: Media-Access-Control) des Endgerätes, welches einen Zugriff auf das leitungslose Kommunikationsnetz wünscht.

Die EP 2 410 772 A1 offenbart ein Verfahren bei dem ein mobiles Endgerät, ID-Daten, welche beispielsweise mittels eines Barcodes erfassbar sind, verwendet um einen bestimmten Dienst eines Kommunikationsnetzes anzufordern. Der Dienst wird in Form einer Anwendung seitens des Kommunikationsnetzes bereitgestellt. Die Bereitstellung der Anwendung erfolgt über Einrichtungen des Kommunikationsnetzes, welche zunächst den Nutzer, seine Position sowie die seitens des Nutzers gewünschte Anwendung identifizieren. Anschließend wird ein Gerät ausgewählt, auf welchem die gewünschte Anwendung ausführbar ist Ober das Kommunikationsnetz wird abschließend der vom Nutzer gewünschte Dienst in Form der Anwendung seitens des Kommunikationsnetzes bereitgestellt.

Die US 2007/037603 A1 offenbart ein Verfahren zur Initialisierung einer Verbindung eines mobilen Endgeräts mit einem WLAN-Netz durch ein Mobilfunknetz-Management-System. Dabei überträgt ein Server einen Identifizierer zum Beispiel in Form eines Tokens an das WLAN-Netz. Alternativ wird der Identifizierer über ein Mobilfunknetz zum mobilen Endgerät übertragen und anschließend vom Endgerät zum WLAN-Netz übertragen.

Vor diesem Hintergrund liegt der vorliegenden Erfindung die Aufgabe zugrunde, eine eingangs genannte Konfiguration zu vereinfachen, insbesondere dahingehend, dass die Eingabe eines Kennworts durch den Nutzer eines Endgerätes entbehrlich ist

Zur Lösung dieser Aufgabe wird mit der vorliegenden Erfindung ein Verfahren zum Konfigurieren eines Endgerätes für einen Zugriff auf ein erstes von einer Netzeinrichtung ausgebildetes leitungsloses Kommunikationsnetz unter Beteiligung einer Konfigurationseinrichtung vorgeschlagen, wobei das Endgerät Ober ein zweites Kommunikationsnetz mit der Konfigurationseinrichtung verbindbar ist und die Netzeinrichtung Ober ein drittes Kommunikationsnetz mit der Konfigurationseinrichtung verbindbar ist, umfassend die folgenden Schritte:
- Erfassen einer der Netzeinrichtung und/oder dem ersten Kommunikationsnetz zugeordneten Kennung mit dem Endgerät, wobei die Kennung von der Konfigurationseinrichtung für eine Identifizierung der Netzeinrichtung nutzbar ist;
- Übertragen der erfassten Kennung von dem Endgerät an die Konfigurationseinrichtung über das zweite Kommunikationsnetz;
- Nutzung der von der Konfigurationseinrichtung empfangenen Kennung zum Aufbau einer Kommunikationsverbindung zwischen der Konfigurationseinrichtung und der Netzeinrichtung Ober das dritte Kommunikationsnetz;
- Übertragen von für einen Zugriff mit dem Endgerät auf das erste Kommunikationsnetz erforderlichen Daten von der Netzeinrichtung an die Konfigurationseinrichtung über die Kommunikationsverbindung zwischen der Konfigurationseinrichtung und der Netzeinrichtung;
- Nutzung der von der Konfigurationseinrichtung empfangenen Daten zum Erstellen von Konfigurationsdaten durch die Konfigurationseinrichtung;
- Übertragen der Konfigurationsdaten von der Konfigurationseinrichtung an das Endgerät über das zweite Kommunikaüonsnetz;
   und
- Nutzung der Konfigurationsdaten zum Konfigurieren des Endgerätes zum Zugriff auf das erste leitungslose Kommunikationsnetz.

Der vorfiegenden Erfindung liegt die Erkenntnis zugrunde, dass eine durch einen Nutzer durchzuführende Konfiguration eines Endgerätes für einen Zugriff auf ein von einer Netzeinrichtung, vorzugsweise einem WLAN-Router, ausgebildetes leitungsloses Kommunlkationsnetz, vorzugsweise ein gesichertes WLAN, entbehrlich ist, wenn das zu konfigurierende Endgerät bereits in einem weiteren Kommunikationsnetz betriebsbereit ist, so dass mittels des Endgerätes eine Kommunikationsverbindung zu einer Konfigurationseinrichtung hergestellt werden kann, wobei die Konfigurationseinrichtung vorteilhafterweise neben der Kommunikationsverbindung mit dem Endgerät eine weitere Kommunikationsverbindung zu der Netzeinrichtung, welche das leitungslose Kommunikationsnetz, für das ein Zugriff gewünscht wird, ausbildet, herstellen kann, wobei die Konfigurationseinrichtung entsprechende für einen Zugriff auf das leitungslose Kommunikationsnetz mit dem Endgerät erforderliche Daten von der Netzeinrichtung anfordern kann und diese Daten vorteilhafterweise zusammen mit weiteren endgeratespezifischen Konfigurationsdaten über das weitere Kommunikationsnetz an das Endgerät senden kann.

Vorteilhafterweise wird das erfindungsgemäße Verfahren zumindest teilweise automatisch ausgeführt, vorzugsweise initiiert durch das übertragen der erfassten Kennung von dem Endgerät an die Konfigurationseinrichtung. Vorteilhafterweise weisen die von dem Endgerät empfangenen Konfigurationsdaten dazu seitens des Endgerätes ausführbare Befehle auf, die das Endgerät dazu veranlassen, eine

Konfiguration des Endgerätes entsprechend der empfangenen Konfigurationsdaten automatisch auszuführen.

Gemäß einer bevorzugten Ausgestaltung des erfindungsgemäßen Verfahrens ist vorgesehen, dass das erste Kommunikationsnetz nach einem ersten Telekommunikationsstandard ausgebildet ist und das zweite und/oder das dritte Kommunikationsnetz nach einem zweiten Telekommunikationsstandard ausgebildet ist. Insbesondere ist vorgesehen, dass das erste Telekommunikationsnetz ein gesichertes Funknetz ist, vorzugsweise ein gesichertes WLAN, welches einem WLAN-Standard nach IEEE 802.11 entspricht. Ein gesichertes Funknetz bzw. WLAN im Sinne der vorliegenden Erfindung ist dabei insbesondere ein Funknetz, welches eine Verschlüsselung verwendet und zumindest die Eingabe eines Kennwortes für einen Zugriff auf das Funknetz erfordert. Des Weiteren ist insbesondere vorgesehen, dass das zweite Kommunikationsnetz ein Mobilfunknetz ist, vorzugsweise ein Mobilfunknetz gemäß einem GSM-, UMTS-, CDMA2000- und/oder LTE-Mobitfunkstandard. Gemäß einer weiteren bevorzugten Ausgestaltung ist das dritte Kommunikationsnetz ein leitungsgebundenes Datennetz, vorteilhafterweise ein PSTN (PSTN: Public Switched Telephone Network). Erfindungsgemäß ist insbesondere aber auch vorgesehen, dass das zweite Kommunikationsnetz und das dritte Kommunikationsnetz identische Kommunikationsnetze sind, vorzugsweise ein Mobilfunknetz gemäß einem LTE-Mobilfunkstandard. Eine besonders bevorzugte Ausgestaltungsvariante der Erfindung ist dadurch gekennzeichnet, dass die Netzeinrichtung ein Wireless Access Point ist, vorzugsweise ein WLAN-Router. Eine weitere besonders bevorzugte Ausgestaltungsvariante der Erfindung sieht vor, dass das Endgerät ein mobiles Endgerät ist, vorzugsweise ein Mobilfunktelefon oder ein Tablett-PC.

Unabhängig von der Ausgestaltung der von dem Endgerät erfassten Kennung wird gemäß einer vorteilhaften Weiterbildung des erfindungsgemäßen Verfahrens von dem Endgerät über das zweite Kommunikationsnetz eine Nutzerkennung an die Konfigurationseinrichtung übertragen. Die Nutzerkennung wird dabei vorzugsweise zur Authentifizierung des Endgerätes und/oder des Nutzers des Endgerätes durch die Konfigurationseinrichtung und/oder eine mit der Konfigurationseinrichtung verbundenen weiteren Einrichtung genutzt bzw. ist für eine entsprechende Authentifizierung nutzbar. Vorzugsweise ist die Nutzerkennung die dem Nutzer eines mobilen Endgerätes eindeutig zugeordnete MSISDN (MSISDN: Mobile Subscriber Integrated Services Network Number) oder die IMSI (IMSI: International Mobile Subscriber Identity). Vorteilhafterweise wird mittels der Kennung und der Nutzerkennung eine Identifizierung der Netzeinrichtung in dem dritten Kommunikationsnetz ermöglicht. Vorzugsweise ist hierzu die Kennung in Verbindung mit der Nutzerkennung mit einer Adressierungsinformation verknüpft unter der die Netzeinrichtung in dem dritten Kommunikationsnetz adressierbar und somit erreichbar ist.

Die Authentifizierung der Nutzerkennung erfolgt vorteilhafterweise durch einen Vergleich der empfangenen Nutzerkennung mit registrierten Kennungen. Die registrierten Kennungen sind dabei vorteilhafterweise in einer Datenbank hinterlegt, auf welche die Konfigurationseinrichtung Zugriff hat. Durch diese Authentifizierung des Nutzers ist vorteilhafterweise ohne Eingabe eines Kennwortes oder Passwortes die Berechtigung des Nutzers für einen Zugriff auf das erste von der Netzeinrichtung ausgebildete leitungslose Kommunikationsnetz erfassbar bzw. überprüfbar. Die Hinterlegung der Nutzerkennung in der Datenbank kann dabei im Rahmen eines durch den Nutzer vorab durchgeführten Registrierungsvorgangs erfolgen, insbesondere wenn das mobile Endgerät und die Netzeinrichtung dem Nutzer von demselben Anbieter bereitgestellt wurden. Darüber hinaus ist vorteilhafterweise vorgesehen, dass eine entsprechende Registrierung seitens des Betreibers des zweiten Kommunikationsnetzes angeboten wird, wobei die Bereitstellung eines Zugriffs auf ein von einer Netzeinrichtung ausgebildetes leitungsloses Kommunikationsnetz, vorzugsweise ein verschlüsseltes WLAN, insbesondere für einen Zugang zum Internet über das leitungslose Kommunikationsnetzwerk ein besonderes Serviceangebot seitens des Betreibers darstellt.

Gemäß einer weiteren vorteilhaften Ausgestaltungsvariante des erfindungsgemäßen Verfahrens ist vorgesehen, dass im Rahmen der Konfiguration des Endgerätes ein Zugriffsprofil für den Zugriff auf das erste Kommunikationsnetz unter Verwendung der an das Endgerät übertragenen Konfigurationsdaten erstellt wird. Vorteilhafterweise wird dieses Zugriffsprofil seitens des Endgerätes gespeichert. Auf diese Weise wird ein besonders einfacher Zugriff auf das erste von der Netzeinrichtung ausgebildete Kommunikationsnetz ermöglicht, wobei der Nutzer vorteilhafterweise keinerlei Eingaben tätigen muss. Insbesondere muss der Nutzer vorteilhafterweise weder ein für den Zugriff erforderliches Kennwort noch einen Netzwerknamen eingeben. In einer weiteren vorteilhaften Ausgestaltung des Verfahrens ist vorgesehen, dass die Konfigurationsdaten als Konfigurationsnachricht an das Endgerät übertragen werden, vorzugsweise mittels einer OTA-SMS (OTA: Over The Air; SMS: Short Message Service). Vorteilhafterweise werden derartige Konfigurationsnachrichten, wie insbesondere OTA-SMS, von einer Vielzahl von Endgeräten unterstützt, so dass das erfindungsgemäße Verfahren mit einer Vielzahl von bereits verfügbaren Endgeräten eingesetzt werden kann.

Eine weitere vorteilhafte Ausgestaltung des erfindungsgemäßen Verfahrens sieht vor, dass die von dem Endgerät an die Konfigurationseinrichtung übertragene Kennung einen Netzwerknamen umfasst. Gemäß einer weiteren vorteilhaften Ausgestaltungsvariante des Verfahrens ist vorgesehen, dass die seitens des Endgerätes an die Konfigurationseinrichtung übertragene Kennung eine Netzeinrichtungsgerätenummer umfasst.

Vorzugsweise ist unter Nutzung der Kennung eine Adressierungsinformation seitens der Konfigurationseinrichtung bestimmbar, welche eine Adressierung der Netzeinrichtung in dem dritten Kommunikationsnetz ermöglicht. Unter Verwendung dieser Adressierungsinformation ist vorteilhafterweise die Netzeinrichtung für die Herstellung einer Kommunikationsverbindung zwischen der Konfigurationseinrichtung und der Netzeinrichtung adressierbar. Vorzugsweise ist die Adressierungsinformation in einer Datenbank mit der Kennung verknüpft, wobei die Konfigurationseinrichtung Zugriff auf die Datenbank hat.

Erfindungsgemäß kann die Erfassung der Kennung, welche von der Konfigurationseinrichtung für eine eindeutige Identifizierung der Netzeinrichtung nutzbar ist, durch Eingabe des Nutzers in das Endgerät erfolgen. Die Kennung kann dabei beispielsweise eine auf der Netzeinrichtung aufgebrachte Seriennummer sein. Bevorzugt ist vorgesehen, dass die Kennung der Netzeinrichtung mittels des Endgerätes ausgelesen werden kann. In einer vorteilhaften Ausgestaltung ist dazu ein Barcode auf der Netzeinrichtung aufgebracht, welcher von dem Endgerät, vorzugsweise mittels einer in das Endgerät integrierten Fotokamera, optisch erfasst werden kann. Als vorteilhafte Alternative hierzu wird vorgeschlagen, die Kennung drahtlos unter Verwendung von RFID-Chips oder NFC-Chips mittels des Endgerätes zu erfassen. Gemäß einer weiteres Ausgestaltungsvariante der Erfindung ist vorgesehen, dass die Kennung der Netzwerkname des in der Netzwerkeinrichtung ausgebildeten leitungslosen Kommunikationsnetzes ist, vorteilhafterweise der Service Set Identifier (SSID). Vorteilhafterweise ist die Netzeinrichtung ausgebildet, zumindest die SSID in vorbestimmten Intervallen an im Empfangsbereich befindliche Endgeräte zu versenden. WLAN-Router oder Wireless Access Points nutzen hierfür üblicherweise sogenannte Beacons, welche neben der SSID insbesondere auch die Art der Verschlüsselung enthalten. Da die SSID üblicherweise frei wählbar ist und somit nicht eindeutig, ist erfindungsgemäß vorgesehen, dass für eine eindeutige Identifizierung der Netzeinrichtung durch die Konfigurationseinrichtung nicht nur die Kennung benutzt wird, sondern eine weitere eindeutige Nutzerkennung, vorzugsweise die MSISDN (MSISDN: Mobile Subscriber Integrated Services Digital Network Number) des Nutzers und/oder die IMEI (IMEI: International Mobile Station Equipment Identity) des Endgerätes. Die Nutzung der von der Konfigurationseinrichtung empfangenen Kennungen zum Aufbau einer Kommunikationsverbindung zwischen der Konfigurationseinrichtung und der Netzeinrichtung Ober das dritte Kommunikationsnetz sieht dabei insbesondere eine Verwendung der empfangenen Kennung zusammen mit einer empfangenen eindeutigen Nutzerkennung vor, um anhand von zuvor hinterlegten Datensätzen, welche vorzugsweise in einer Datenbank verwaltet werden, eine Adressierungsinformation zu ermitteln, welche es erlaubt, die Netzeinrichtung in dem dritten Kommunikationsnetz eindeutig zu adressieren, so dass die Konfigurationseinrichtung eine Kommunikationsverbindung zu der Netzeinrichtung aufbauen kann.

Gemäß einem weiteren vorteilhaften Aspekt der vorliegenden Erfindung erfolgt die Übertragung der Kennung von dem Endgerät über das zweite Kommunikationsnetz an die Konfigurationseinrichtung mittels einer Multimedianachricht. In einer vorteilhaften Ausgestaltung ist vorgesehen, dass die Übertragung mittels eines Dienstes eines Mobilfunknetzes erfolgt, vorzugsweise mittels SMS oder MMS (MMS: Multimedia Messaging Service). Die Nutzung derartige standardisierter Nachrichtenformate bietet insbesondere den Vorteil, dass diese seitens des Betreibers des zweiten Kommunikationsnetzes zu einheitlich festgelegten Konditionen als kostenpflichtiger Dienst gegenüber dem Nutzer abgerechnet werden können.

Gemäß einer weiteren vorteilhaften Ausgestaltung des erfindungsgemäßen Verfahrens erfolgt die Übertragung der Kennung von dem Endgerät über das zweite Kommunikationsnetz an die Konfigurationseinrichtung und/oder die Übertragung der Konfigurationsdaten von der Konfigurationseinrichtung über das zweite Kommunikationsnetz an das Endgerät unter Nutzung einer gesicherten IP-Verbindung, wobei die Übertragung vorzugsweise unter Verwendung eines über einen Browser erfolgenden Dialoges zwischen dem Endgerät und der Konfigurationseinrichtung erfolgt. Ein derartiger Dialog bietet insbesondere den Vorteil, dass der Nutzer durch eine Konfiguration geführt werden kann und die Durchführung des erfindungsgemäßen Verfahrens für den Nutzer transparent ist. Insbesondere kann der Nutzer auf Nutzungsbedingungen, erforderliche Eingaben und/oder anfallende Kosten sowie auf weitere Informationen hingewiesen werden. Hierdurch kann vorteilhafterweise die Akzeptanz von Nutzem hinsichtlich der Anwendung eines erfindungsgemäßen Verfahrens gesteigert werden.

Mit der vorliegenden Erfindung wird zudem ein Verfahren zur automatisierten Konfiguration eines Endgerätes für den Zugang in ein erstes Kommunikationsnetz, insbesondere ein leitungsloses Kommunikationsnetz, vorgeschlagen, wobei eine Konfigurationseinrichtung folgende Schritte ausführt:
- Herstellen einer ersten Verbindung über ein zweites Kommunikationsnetz,
- Anfordern von Kennungen für den Zugang des Endgerätes in das zweite Kommunikationsnetz über die erste Verbindung,
- Empfangen mindestens einer Kennung des ersten Kommunikationsnetzes oder einer Kennung einer Netzeinrichtung des ersten Kommunikationsnetzes über die erste Verbindung,
- Identifizieren einer Netzeinrichtung durch Auswerten der empfangenen mindestens einen Kennung,
- Herstellen einer zweiten Verbindung mit der identifizierten Netzeinrichtung,
- Anfordern von Zugangsdaten für den Zugang des Endgerätes in das erste Kommunikationsnetz von der Netzeinrichtung über die zweite Verbindung,
- Empfangen der Zugangsdaten für den Zugang in das erste Kommunikationsnetz über die zweite Verbindung, wobei die Zugangsdaten eine erste und eine zweite Zugangskennung für den Zugang in das zweite Kommunikationsnetz enthalten,
- Erstellen einer Konfigurationsnachricht unter Verwendung der empfangenen Zugangsdaten für den Zugang in das erste Kommunikationsnetz,
- Senden der erstellen Konfigurationsnachricht über die erste Verbindung.

Unter einem Zugang in ein Kommunikationsnetz ist dabei insbesondere ein Zugriff auf ein Kommunikationsnetz, wie anfangs erläutert, zu verstehen.

Mit der vorliegenden Erfindung wird des Weiteren ein Verfahren zur automatisierten Konfiguration eines Endgerätes für den Zugang in ein erstes Kommunikationsnetz vorgeschlagen, wobei das Endgerät folgende Schritte ausführt:
- Herstellen einer ersten Verbindung über ein zweites Kommunikationsnetz,
- Übertragen mindestens einer Kennung eines ersten Kommunikationsnetzes oder einer Kennung einer Netzeinrichtung des ersten Kommuriikationsnetzes über die erste Verbindung,
- Empfangen einer Konfigurationsnachricht über die erste Verbindung, wobei die Konfigurationsnachricht Zugangsdaten für den Zugang in das erste Kommunikationsnetz enthält,
- Erstellen eines Zugangsprofils für den Zugang in das erste Kommunikationsnetz unter Verwendung der Zugangsdaten der empfangenen Konfigurationsnachricht, wobei die Zugangsdaten eine erste und eine zweite Zugangskennung für den Zugang in das erste Kommunikationsnetz enthalten,
- Anfordern des Zugangs in das erste Kommunikationsnetz über eine zweite Verbindung durch Senden der ersten und zweiten Zugangskennung aus dem erstellen Zugangsprofil an die Netzeinrichtung des ersten Kommunikationsnetzes,
- Empfangen einer zugewiesenen Netzadresse für den Zugang in das erste Kommunikationsnetz von der Netzeinrichtung des ersten Kommunikationsnetzes,
- Herstellen der zweiten Verbindung über das erste Kommunikationsnetz unter Verwendung der zugewiesenen Netzadresse.

Ein Zugang zu einem Kommunikationsnetz ist dabei insbesondere ein Zugriff auf ein Kommunikationsnetz wie eingangs beschrieben.

Eine vorteilhafte Weiterbildung des Verfahrens zur automatisierten Konfiguration des Endgerätes für den Zugang in das erste Kommunikationsnetz sieht vor, dass die Konfigurationseinrichtung nach dem Herstellen der ersten Verbindung über ein zweites Kommunikationsnetz zusätzlich folgende Schritte ausführt:
- Empfangen einer Nutzerkennung über die erste Verbindung,
- Authentifizieren der Nutzerkennung durch Vergleichen der empfangenen Nutzerkennung mit registrierten Kennungen.

Eine weitere vorteilhafte Weiterbildung des Verfahrens zur automatisierten Konfiguration des Endgerätes für den Zugang in ein erstes Kommunikationsnetz sieht vor, dass das Endgerät nach dem Herstellen der ersten Verbindung über ein zweites Kommunikationsnetz zusätzlich folgende Schritte ausführt:
- Übertragen einer Nutzerkennung über die erste Verbindung.
Weitere vorteilhafte Ausgestaltungsvarianten des Verfahrens sehen vor, dass
- das erste Kommunikationsnetz nach einem ersten Telekommunikationsstandard und das zweite Kommunikationsnetz nach einem zweiten Telekommunikationsstandard ausgestaltet ist;
- die wenigstens eine Kennung des ersten Kommunikationsnetzes einen Netzwerknamen des ersten Kommunikationsnetzes enthält;
- die Kennung der Netzeinrichtung des ersten Kommunikationsnetzes eine Netzeinrichtungsgerätenummer enthält;
- das Übertragen der wenigstens einen Kennung des ersten Kommunikationsnetzes oder der Kennung der Netzeinrichtung des ersten Kommunikationsnetzes durch das Senden der mindestens einen Kennung des ersten Kommunikationsnetzes oder der Kennung der Netzeinrichtung des ersten Kommunikationsnetzes in einer Multimedianachricht erfolgt;
   und/oder
- das Herstellen der ersten Verbindung in dem zweiten Kommunikationsnetz durch ein Herstellen der ersten Verbindung als gesicherte IP-Verbindung und durch ein Übertragen der mindestens einen Kennung des ersten Kommunikationsnetzes oder der Kennung der Netzeinrichtung des ersten Kommunikationsnetzes unter Verwendung von Eingaben in einem Browser auf dem Endgerät erfolgt.

Zur Lösung der eingangs genannten Aufgabe wird mit der vorliegenden Erfindung des Weiteren eine Konfigurationseinrichtung zum Konfigurieren eines Endgerätes für einen Zugriff auf ein erstes von einer Netzeinrichtung ausgebildetes leitungsloses Kommunikationsnetz vorgeschlagen, wobei das Endgerät über ein zweites Kommunikationsnetz mit der Konfigurationseinrichtung verbindbar ist und die Netzeinrichtung über ein drittes Kommunikationsnetz mit der Konfigurationseinrichtung verbindbar ist, wobei die Konfigurationseinrichtung durch Mittel zum Ausführen der erfindungsgemäßen Verfahrensschritte gekennzeichnet ist, welche von einer Konfigurationseinrichtung ausgeführt werden bzw. ausführbar sind.

Vorteilhafterweise umfasst die Konfigurationseinrichtung einen Konfigurationsserver, einen Authentifizierungsserver, einen Datenbankserver, einen Konfigurationsnachrichtenserver, eine erste Schnittstelle zur Herstellung einer ersten Verbindung mit einem Endgerät über das zweite Kommunikationsnetz und/oder eine zweite Schnittstelle zur Herstellung einer zweiten Verbindung zu einer Netzeinrichtung des ersten Kommunikationsnetzes. Die über die zweite Schnittstelle hergestellte zweite Verbindung ist vorteilhafterweise zum Konfigurieren nutzbar. Vorteilhafterweise ist die Konfigurationseinrichtung ein Konfigurationsserver. Vorteilhafterweise erzeugt der Konfigurationsserver mittels wenigstens eines netzbasierten Dienstes die erfindungsgemäße Konfiguration und steuert den Konfigurationsvorgang.

Eine erfindungsgemäße Konfigurationseinrichtung weist vorteilhafterweise Mittel zum Herstellen einer Kommunikationsverbindung Ober das zweite Kommunikationsnetz und/oder das dritte Kommunikationsnetz, Mittel zum Anfordern von Kennungen für den Zugriff eines Endgerätes auf das erste Kommunikationsnetz über die erste Verbindung auf, Mittel zum Empfangen mindestens einer Kennung des ersten Kommunikationsnetzes oder einer Kennung einer Netzeinrichtung des ersten Kommunikationsnetzes über die erste Verbindung, Mittel zum Identifizieren einer Netzeinrichtung durch Auswerten der empfangenen mindestens einen Kennung, Mittel zum Herstellen einer zweiten Verbindung mit der identifizierten Netzeinrichtung, Mittel zum Anfordern von Zugriffsdaten für den Zugriff des Endgerätes auf das erste Kommunikationsnetz von der Netzeinrichtung über die zweite Verbindung, Mittel zum Empfangen der Zugriffsdaten für den Zugriff auf das erste Kommunikationsnetz über die zweite Verbindung, wobei die Zugriffsdaten eine erste und eine zweite Zugriffskennung für den Zugriff auf das erste Kommunikationsnetz enthalten, Mittel zum Erstellen einer Konfigurationsnachricht unter Verwendung der empfangenen Zugriffsdaten für den Zugriff aus das erste Kommunikationsnetz, Mittel zum Versenden der erstellen Konfigurationsnachricht über die erste Verbindung, mit Mittel zum Empfangen einer Nutzerkennung über die erste Verbindung und/oder Mittel zum Authentifizieren der Nutzerkennung durch Vergleichen der empfangen Nutzerkennung mit registrierten Kennungen auf.

Zur Lösung der eingangs genannten Aufgabe wird mit der vorliegenden Erfindung zudem eine Netzeinrichtung zur Ausbildung eines leitungslosen Kommunikationsnetzes, welche über ein weiteres Kommunikationsnetz mit einer Konfigurationseinrichtung verbindbar ist, vorgeschlagen, welche durch Mittel zur Ausführung der erfindungsgemäßen Verfahrensschritte gekennzeichnet ist, welche seitens einer Netzeinrichtung ausgeführt werden bzw. ausführbar sind.

Erfindungsgemäß ist dabei vorteilhafterweise vorgesehen, dass die Netzeinrichtung eine erste Schnittstelle zur Herstellung einer ersten Verbindung mit einem Endgerät über ein erstes Kommunikationsnetz und eine zweite Schnittstelle zur Herstellung einer zweiten Verbindung umfasst, wobei die zweite Schnittstelle der Netzeinrichtung dazu ausgebildet und/oder eingerichtet ist, Zugriffsdaten für den Zugriff eines Endgerätes auf das erste Kommunikationsnetz über die zweite Verbindung auf Anforderung einer Konfigurationseinrichtung zu senden.

Gemäß einer vorteilhaften Ausgestaltung der erfindungsgemäßen Netzeinrichtung ist die Netzeinrichtung ein Wireless Access Point oder ein WLAN-Router. Vorteilhafterweise weist die Netzeinrichtung ein Bedienelement sowie eine Anzeigeeinrichtung auf, wobei durch Betätigung des Bedienelementes in der Anzeigeeinrichtung eine Kennung wiedergegeben wird, welche von einer erfindungsgemäßen Konfigurationseinrichtung für eine Identifizierung der Netzeinrichtung nutzbar ist.

Mit der vorliegenden Erfindung wird zudem ein Endgerät, vorzugsweise ein mobiles Endgerät vorgeschlagen, welches Mittel zur Ausführung der erfindungsgemäßen Verfahrensschritte umfasst, welche seitens eines Endgerätes ausgeführt werden bzw. ausführbar sind. Gemäß einer vorteilhaften Ausgestaltung weist das Endgerät Mittel zum Herstellen einer ersten Verbindung über ein zweites Kommunikationsnetz, Mittel zum Übertragen wenigstens einer Kennung eines ersten Kommunikationsnetzes oder eine Kennung einer Netzeinrichtung des ersten Kommunikationsnetzes über die Verbindung, Mittel zum Empfangen einer Konfigurationsnachricht über die erste Verbindung, wobei die Konfigurationsnachricht Zugriffsdaten für den Zugriff des Endgerätes auf das erste Kommunikationsnetz enthält, Mittel zum Erstellen eines Zugriffsprofils für den Zugriff des Endgerätes auf das erste Kommunikationsnetz unter Verwendung der Zugriffsdaten der empfangenen Konfigurationsnachricht, wobei die Zugriffsdaten eine erste und eine zweite Zugriffskennung für den Zugriff auf das erste Kommunikationsnetz enthalten, Mittel zum Anfordern des Zugriffs auf das erste Kommunikationsnetz über eine zweite Verbindung durch Verbinden der ersten und zweiten Zugriffskennung aus dem erstellen Zugriffsprofil an die Netzeinrichtung des zweiten Telekommunikationsnetzes, Mittel zum Empfangen einer zugewiesenen Netzadresse für den Zugriff auf das erste Kommunikationsnetz von der Netzeinrichtung des ersten Kommunikationsnetzes, Mittel zum Herstellen der zweiten Verbindung über das erste Kommunikationsnetz unter Verwendung der zugewiesenen Netzadresse und/oder Mittel zum Übertragen einer Nutzerkennung über die erste Verbindung auf.

Nachfolgend werden zwei Konfigurationsszenarien beschrieben, wobei das erste Kommunikationsnetz, ein verschlüsseltes WLAN, das zweite Kommunikationsnetz ein Mobilfunknetz ist, das Endgerät ein in dem Mobilfunknetz betreibbares mobiles Endgerät, die Netzeinrichtung ein WLAN-Router und die Konfigurationseinrichtung ein Konfigurationsserver ist. Vorteilhafterweise kann dabei die Konfiguration eines gesicherten WLAN-Zugangs bzw. WLAN-Zugriffs über den WLAN-Router unter Nutzung des mobilen Endgerätes mittels eines netzbasierten Dienstes ohne Zuhilfenahme eines PCs vorgenommen werden. Der Konfigurationsserver steuert dabei vorteilhafterweise im Wesentlichen den Konfigurationsvorgang. Der WLAN-Router ist vorteilhafterweise ausgebildet, eine netzbasierte Konfiguration zu unterstützen und im Rahmen der Ausführung des erfindungsgemäßen Verfahrens eine Geräte-ID zu übertragen, wozu der WLAN-Router vorteilhafterweise eine spezielle Firmware aufweist. Mittels der Geräte-ID ist es vorteilhafterweise möglich, den WLAN-Router als Gerät in einem Kommunikationsnetz eindeutig zu identifizieren. Die Geräte-ID kann dabei gemäß einer ersten Ausgestaltung als Seriennummer des Gerätes oder in ähnlicher fest implementierter Weise an der Außenseite des Gerätes dem Benutzer kenntlich gemacht werden. Gemäß einer zweiten Ausgestaltungsvariante ist die ID ein seitens des WLAN-Routers zufällig erzeugter Schlüssel, wobei der Schlüssel entweder seitens des WLAN-Routers an das mobile Endgerät übertragbar ist oder mittels einer Anzeigeeinrichtung seitens des WLAN-Routers dargestellt wird, vorteilhafterweise nach Bestätigung eines Bedienelements des WLAN-Routers.

Ist die Geräte-ID eine Seriennummer bzw. eine festimplementierte ID so ist vorgesehen, dass der Nutzer mittels des mobilen Endgerätes eine Kommunikation mit dem Konfigurationsserver initiiert, welche nach Herstellung einer Kommunikationsverbindung dem mobilen Endgerät Daten sendet, welche seitens eines Browsers des mobilen Endgerätes dargestellt werden. Diese Daten führen den Nutzer im Rahmen eines Dialoges durch die Konfiguration. Zunächst muss der Kunde dabei die Geräte-ID des WLAN-Routers in ein Dialogfeld eingeben. Alternativ hierzu ist vorgesehen, ein Foto eines am Gehäuse des WLAN-Routers angebrachten Barcodes mittels des Endgerätes bzw. einer in das Endgerät integrierten Kamera zu erstellen und dieses mittels des Endgerätes an den Konfigurationsserver zu übertragen. Sobald der Nutzer eine gültige Geräte-ID mittels des mobilen Endgerätes an den Konfigurationsserver übertragen hat, wird der eigentliche Konfigurationsvorgang gestartet. Der Konfigurationsserver bestimmt unter Nutzung einer Datenbank eine der Geräte-ID zugeordnete Adressierungsinformation und nutzt somit die Geräte-ID für den Aufbau einer Kommunikationsverbindung zu dem WLAN-Router. Ist die Kommunikationsverbindung hergestellt, so fordert der Konfigurationsserver von dem WLAN-Router die für den Zugriff auf das von dem WLAN-Router ausgebildete WLAN an. Die Zugriffsdaten werden daraufhin an den Konfigurationsserver übertragen, welcher die Zugriffsdaten umfassende Konfigurationsdaten an das mobile Endgerät sendet. Hierzu nutzt der Konfigurationsserver eine OTA-SMS.

Ist die Geräte-ID eine zufällig erzeugte Geräte-ID, so ist vorteilhafterweise vorgesehen, dass die Konfiguration seitens des WLAN-Routers initiiert wird. Wurde eine zufällige Geräte-ID erzeugt, derart, dass diese seitens des mobilen Endgerätes erfassbar ist, baut der WLAN-Router eine Verbindung zu dem Konfigurationsserver auf und überträgt die zufällig erzeugte Geräte-ID an den Konfigurationsserver. Zur Identifizierung des WLAN-Routers bzw. zur Zuordnung des WLAN-Routers zu dem mobilen Endgerät für eine entsprechende Nutzung eines Zugangs zu einem seitens des WLAN-Routers ausgebildeten Kommunikationsnetzes ist vorgesehen, dass der Nutzer mittels des mobilen Endgerätes eine Kommunikationsverbindung zu dem Konfigurationsserver aufbaut und die Geräte-ID überträgt. Zusätzlich zu der Geräte-ID wird die MSISDN und/oder die IMSI des Nutzers an den Konfigurationsserver übertragen.

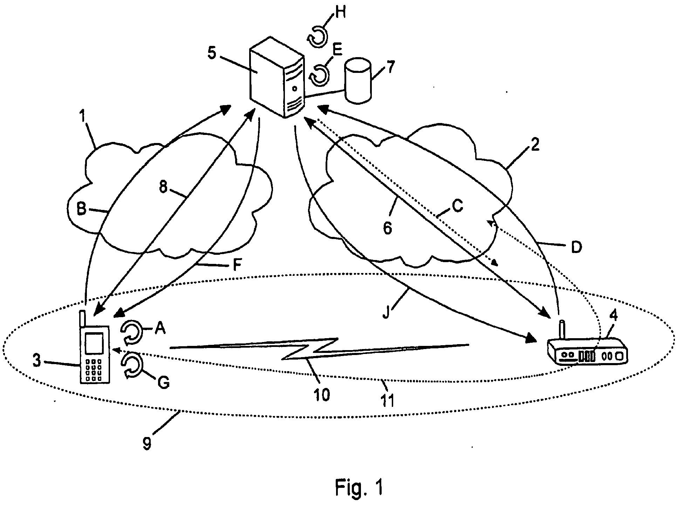

Weitere vorteilhafte Einzelheiten, Merkmale und Ausgestaltungen der vorliegenden Erfindung sind im Zusammenhang mit dem in Figur 1 dargestellten Ausführungsbeispiel näher erläutert. Dabei zeigt

Fig. 1 in einer schematischen Darstellung ein Ausführungsbeispiel für ein erfindungsgemäßes Verfahren.

In Figur 1 ist ein Ausführungsbeispiel für ein erfindungsgemäßen Verfahren zum Konfigurieren eines Endgerätes 3 für einen Zugriff auf ein erstes von einer Netzeinrichtung 4 ausgebildetes leitungsloses Kommunikationsnetz 9 unter Beteiligung einer Konfigurationseinrichtung 5 dargestellt, wobei das Endgerät 3 über ein zweites Kommunikationsnetz 1 mit der Konfigurationseinrichtung 5 verbindbar ist und die Netzeinrichtung 4 über ein drittes Kommunikationsnetz 2 mit der Konfigurationseinrichtung 5 verbindbar ist. Das dargestellte Verfahren umfasst dabei die folgenden Schritte:
- Erfassen A einer der Netzeinrichtung 4 und/oder dem ersten Kommunikationsnetz 9 zugeordneten Kennung mit dem Endgerät 3, wobei die Kennung von der Konfigurationseinrichtung 5 für eine Identifizierung der Netzeinrichtung 4 nutzbar ist;
- Übertragen B der erfassten Kennung von dem Endgerät 3 an die Konfigurationseinrichtung 5 über das zweite Kommunikationsnetz 1;
- Nutzung der von der Konfigurationseinrichtung 5 empfangenen Kennung zum Aufbau C einer Kommunikationsverbindung 6 zwischen der Konfigurationseinrichtung 5 und der Netzeinrichtung 4 über das dritte Kommunikationsnetz 2;
- Übertragen D von für einen Zugriff mit dem Endgerät 3 auf das erste Kommunikationsnetz 9 erforderlichen Daten von der Netzeinrichtung 4 an die Konfigurationseinrichtung 5 über die Kommunikationsverbindung 6 zwischen der Konfigurationseinrichtung 5 und der Netzeinrichtung 4:
- Nutzung der von der Konfigurationseinrichtung 5 empfangenen Daten zum Erstellen E von Konfigurationsdaten durch die Konfigurationseinrichtung 5;
- Übertragen F der Konfigurationsdaten von der Konfigurationseinrichtung 5 an das Endgerät 3 über das zweite Kommunikationsnetz 1;
   und
- Nutzung der Konfigurationsdaten zum Konfigurieren G des Endgerätes 3.

Das erfindungsgemäße Verfahren wird im Nachfolgenden näher erläutert. Gemäß dem dargestellten Ausführungsbeispiel ist das erste Kommunikationsnetz 9 ein gesichertes bzw. verschlüsseltes WLAN (symbolisch durch die gestrichelte Ellipse dargestellt) und das zweite Kommunikationsnetz 1 ein Mobilfunknetz (symbolisch als Wolke dargestellt). Das dritte Kommunikationsnetz 2 ist ein leitungsgebundenes Datennetz (symbolisch als Wolke dargestellt). Das Endgerät 3 ist ein Mobilfunktelefon, welches in dem Mobilfunknetz 1 betriebsbereit ist. Das Mobilfunktelefon 1 ist zudem ausgebildet, über eine Funkschnittstelle mit der Netzeinrichtung 4, vorliegend einem WLAN-Router, zu kommunizieren, vorliegend symbolisch durch den Zick-Zack-Pfeil 10 dargestellt. Die Datenübertragung in dem von dem WLAN-Router 4 ausgebildeten Funknetz erfolgt vorteilhafterweise gemäß einem IEEE-Standard, vorzugsweise gemäß IEEE 802.11n. Die Konfigurationseinrichtung 5 ist vorliegend ein Konfigurationsserver, welcher Zugriff auf eine Datenbank 7 hat. In der Datenbank 7 sind Kennungen, welche eine eindeutige Identifizierung von Netzeinrichtungen in dem dritten Kommunikationsnetz 2 ermöglichen, insbesondere durch Verknüpfung mit entsprechenden Adressierinformationen, hinterlegt. Insbesondere ist eine Kennung zur eindeutigen Identifizierung des WLAN-Routers 4 in der Datenbank 7 hinterlegt, wobei die Kennung durch entsprechende Verknüpfung eine Adressierung der Netzeinrichtung 4 im dritten Kommunikationsnetz 2 ermöglicht. Insofern ist die Kennung zum Aufbau einer Kommunikationsverbindung 6 zwischen der Konfigurationseinrichtung 5 und der Netzeinrichtung 4 über das dritte Kommunikationsnetz 2 nutzbar. Zudem ist in der Datenbank 7 zumindest eine Nutzerkennung, vorliegend die MSISDN eines Nutzers, hinterlegt, wobei die Nutzerkennung mit den Nutzer betreffenden Daten verknüpft ist. Ferner ist bei dem dargestellten Verfahren vorgesehen, dass in der Datenbank 7 die IMEI des mobilen Endgerätes 3 gespeichert ist. Mit der IMEI verknüpft sind vorteilhafterweise endgeräteindividuelle Konfigurationsdaten.

Bei dem in Fig. 1 dargestellten Verfahren ist vorgesehen, dass zunächst mit dem Mobilfunktelefon 3 eine Kennung des WLAN-Routers 4 erfasst wird. Die Kennung ist vorliegend die Seriennummer des WLAN-Routers, welche in der Datenbank 7 mit einer entsprechenden Adressierungsinformation verknüpft ist, wodurch eine Identifizierung des WLAN-Routers 4 in dem dritten Kommunikationsnetz 2 ermöglicht ist. Zur Erfassung der Seriennummer ist vorgesehen, dass der Nutzer des Mobilfunktelefons 3 die Seriennummer von dem WLAN-Router 4 abliest und mittels der Eingabemittel des Mobilfunktelefons 3 in das Mobilfunktelefon 3 eingibt. In einer komfortableren, vorliegend nicht dargestellten Ausführungsvariante ist vorgesehen, dass die Erfassung der Seriennummer mittels des Mobilfunktelefons 3 durch ein Fotografieren der Seriennummer mittels einer seitens des Mobilfunktelefons 3 bereitgestellten Kamera erfolgt.

Das Erfassen der Seriennummer als Kennung durch das Mobilfunktelefon 3 ist vorliegend symbolisch durch den mit dem Bezugszeichen A gekennzeichneten Pfeil dargestellt.

Nach dem Erfassen der Kennung wird seitens des Mobilfunktelefons 3 eine Kommunikationsverbindung 8 (symbolisch durch den Doppelpfeil dargestellt) über das Mobilfunknetz 1 zu dem Konfigurationsserver 5 hergestellt. Unter Nutzung der Kommunikationsverbindung 8 überträgt das Mobilfunktelefon 3 die erfasste Seriennummer der Netzeinrichtung 4 zusammen mit der MSISDN des Nutzers sowie der IMEI des Mobilfunktelefons 3 an den Konfigurationsserver 5. Die Übertragung ist vorliegend symbolisch durch den Pfeil B dargestellt. Nachdem der Konfigurationsserver 5 die Daten von dem Mobilfunktelefon 3 empfangen hat, erfolgt eine Authentifizierung der Nutzerkennung, vorliegend der MSISDN, seitens des Konfigurationsservers 5, wobei die Authentifizierung der Nutzerkennung durch einen Vergleich der empfangenen MSISDN mit entsprechend seitens der Datenbank 7 registrierten Nutzerkennungen erfolgt. Die Authentifizierung ist vorliegend symbolisch durch den Pfeil H dargestellt. Durch die Authentifizierung ist vorteilhafterweise seitens der Konfigurationseinrichtung 5 feststellbar, ob der Nutzer berechtigt ist, auf das WLAN 9 zuzugreifen.

Nach erfolgreicher Authentifizierung stellt der Kommunikationsserver 5 eine Kommunikationsverbindung 6 (symbolisch durch den Doppelpfeil dargestellt) zwischen dem Konfigurationsserver 5 und dem WLAN-Router 4 über das dritte Kommunikationsnetz 2 her, wobei der Konfigurationsserver 5 zum Aufbau der Kommunikationsverbindung 6 die an den Konfigurationsserver 5 übertragene Seriennummer nutzt, indem der Konfigurationsserver 5 die mit der Seriennummer in der Datenbank 7 verknüpfte Adressierungsinformation ermittelt. Der Aufbau der Kommunikationsverbindung 6 ist in Fig. 1 symbolisch durch den gestrichelten Pfeil C dargestellt. Über die Kommunikationsverbindung 6 fordert der Konfigurationsserver 5 von dem WLAN-Router 4 Daten für einen Zugriff auf das WLAN 9, insbesondere den Netzwerknamen und das erforderliche Kennwort an, vorliegend durch den Pfeil J symbolisch dargestellt. Daraufhin überträgt der WLAN-Router 4 in einem symbolisch durch den Pfeil D gekennzeichneten Verfahrensschritt die angeforderten Daten an den Konfigurationsserver 5. Der Konfigurationsserver 5 erstellt daraufhin unter Nutzung der seitens des WLAN-Routers 4 bereitgestellten Daten und unter Nutzung von mit der IMEI in der Datenbank 7 verknüpften endgerätespezifischen Konfigurationsdaten Konfigurationsdaten für die Konfiguration des Mobilfunktelefons 3 für einen Zugriff auf das WLAN 9. Das Erstellen dieser Konfigurationsdaten durch den Konfigurationsserver 5 ist vorliegend symbolisch durch den Pfeil E dargestellt.

Nach dem Erstellen der Konfigurationsdaten sendet der Konfigurationsserver 5 die erstellen Konfigurationsdaten als Konfigurationsnachricht an das Mobilfunktelefon 3. Das Übertragen der Konfigurationsdaten ist dabei symbolisch durch den Pfeil F dargestellt. Für die Übertragung der Konfigurationsdaten nutzt der Konfigurationsserver 5 von dem Mobilfunktelefon 3 die zu Beginn des Verfahrens aufgebaute Kommunikationsverbindung 8 über das Mobilfunknetz 1. Mit Empfang der Konfigurationsdaten durch das Mobilfunktelefon 3 wird das Mobilfunktelefon 3 automatisch für einen Zugriff auf das WLAN 9 konfiguriert, wobei insbesondere die für einen Zugriff erforderlichen Zugriffsdaten, insbesondere der Netzwerkname und das Kennwort des verschlüsselten WLANs 9 von dem Mobilfunktelefon 3 gespeichert werden. Gemäß einer vorteilhaften Ausgestaltung des Verfahrens bleibt ein für einen Zugriff auf ein erstes leitungsloses Kommunikationsnetz 9 erforderliches Kennwort für den Nutzer unsichtbar, so dass eine nicht autorisierte Weitergabe des Kennwortes durch den Nutzer nicht möglich ist.

Die über das Mobilfunknetz 1 aufgebaute Kommunikationsverbindung 8 zwischen dem Mobilfunktelefon 3 und dem Konfigurationsserver 5 wird vorliegend von einem Browser des Mobilfunktelefons 3 genutzt, wobei dem Nutzer Informationen hinsichtlich der Durchführung des Verfahrens in einem Dialog seitens des Browsers wiedergegeben werden.

Nach einer erfolgreichen Konfiguration des Mobilfunktelefons 3 für einen Zugriff auf das Funknetz 9 kann das Mobilfunktelefon 3 vorteilhafterweise Ober den WLAN-Router 4 eine Kommunikationsverbindung 11 (symbolisch durch den gestrichelten Doppelpfeil dargestellt) zu dem dritten Kommunikationsnetz 2 aufbauen, wenn sich das Mobilfunktelefon in dem lokalen Funknetz 9 (symbolisch durch die gestrichelte Ellipse dargestellt) befindet.

Gemäß einer bevorzugten Anwendung des erfindungsgemäßen Verfahrens ist der Nutzer des Endgerätes 3 gleichzeitig Besitzer des WLAN-Routers 4 bzw. eines Wireless Access Points. Der Nutzer nutzt dabei das Verfahren für eine Integration seines WLAN-fähigen Endgerätes 3 in ein bestehendes gesichertes WLAN, wobei vorteilhafterweise eine Kennworteingabe sowie eine Konfiguration über einen PC entbehrlich ist. Das Endgerät 3 kommuniziert dazu über ein Mobilfunknetz 1 mit einem Konfigurationsserver 5, um die Integration des zu integrierenden Endgerätes 3 bedienerfreundlich durchzuführen. Hierbei kommt das erfindungsgemäße Verfahren zur Anwendung. Dem Konfigurationsserver 5 wird dabei seitens des Endgerätes 3 über den Kommunikationskanal 8 die Router-ID mitgeteilt, wodurch die weiteren Verfahrensschritte des erfindungsgemäßen Konfigurationsvorgangs gestartet werden.

Das in Fig. 1 dargestellte Ausführungsbeispiel dient lediglich der Erläuterung der Erfindung und ist für diese nicht beschränkend.

### Bezugszeichenliste

- 1: zweites Kommunikationsnetz (Mobilfunknetz)
- 2: drittes Kommunikationsnetz (leitungsgebundenes Datennetz)
- 3: Endgerät (Mobilfunktelefon)
- 4: Netzeinrichtung (WLAN-Router)
- 5: Konfigurationseinrichtung (Konfigurationsserver)
- 6: Kommunikationsverbindung (zwischen Konfigurationseinrichtung (5) und Netzeinrichtung (4))
- 7: Datenbank
- 8: Kommunikationsverbindung (zwischen Endgerät (3) und Konfigurationseinrichtung (5))
- 9: erstes Kommunikationsnetz (WLAN)
- 10: Funkverbindung zwischen Endgerät (3) und Netzeinrichtung (4)
- 11: Zugriff seitens des Endgerätes (3) auf das dritte Kommunikationsnetz (2) über das von der Netzeinrichtung (4) ausgebildete erste Kommunikationsnetz (9)
- A: Erfassen einer Kennung
- B: Übertragen der erfassten Kennung
- C: Aufbau einer Kommunikationsverbindung (6)
- D: Übertragen von Daten
- E: Erstellen von Konfigurationsdaten
- F: Übertragen der Konfigurationsdaten
- G: Konfigurieren des Endgerätes (3)
- H: Authentifizieren des Nutzers
- J: Anfordern von Daten

## Patentansprüche

1. Verfahren zum Konfigurieren eines Endgerätes (3) für einen Zugriff auf ein erstes von einer Netzeinrichtung (4) ausgebildetes leitungsloses Kommunikationsnetz (9) unter Beteiligung einer Konfigurationseinrichtung (5),
wobei
das Endgerät (3) über ein zweites Kommunikationsnetz (1) mit der Konfigurationseinrichtung (5) verbindbar ist und
die Netzeinrichtung (4) über ein drittes Kommunikationsnetz (2) mit der Konfigurationseinrichtung (5) verbindbar ist,
umfassend die folgenden Schritte:
- Erfassen (A) einer der Netzeinrichtung (4) und/oder dem ersten Kommunikationsnetz (9) zugeordneten Kennung mit dem Endgerät (3), wobei die Kennung von der Konfigurationseinrichtung (5) für eine Identifizierung der Netzeinrichtung (4) nutzbar ist;
- Übertragen (B) der erfassten Kennung von dem Endgerät (3) an die Konfigurationseinrichtung (5) über das zweite Kommunikationsnetz (1);
- Nutzung der von der Konfigurationseinrichtung (5) empfangenen Kennung zum Aufbau (C) einer Kommunikationsverbindung (6) zwischen der Konfigurationseinrichtung (5) und der Netzeinrichtung (4) über das dritte Kommunikationsnetz (2);
- Übertragen (D) von für einen Zugriff mit dem Endgerät (3) auf das erste Kommunikationsnetz (9) erforderlichen Daten von der Netzeinrichtung (4) an die Konfigurationseinrichtung (5) über die Kommunikationsverbindung (6) zwischen der Konfigurationseinrichtung (5) und der Netzeinrichtung (4);
- Nutzung der von der Konfigurationseinrichtung (5) empfangenen Daten zum Erstellen (E) von Konfigurationsdaten durch die Konfigurationseinrichtung (5);
- Übertragen (F) der Konfigurationsdaten von der Konfigurationseinrichtung (5) an das Endgerät (3) über das zweite Kommunikationsnetz (1); und
- Nutzung der Konfigurationsdaten zum Konfigurieren (G) des Endgerätes (3) zum Zugriff auf das erste leitungslose Kommunikationsnetz (9).

2. Verfahren nach Anspruch 1, **dadurch gekennzeichnet, dass** das erste Kommunikationsnetz (9) nach einem ersten Telekommunikationsstandard ausgebildet ist und das zweite und/oder das dritte Kommunikationsnetz (1, 2) nach einem zweiten Telekommunikationsstandard ausgebildet ist.

3. Verfahren nach Anspruch 1 oder Anspruch 2, **dadurch gekennzeichnet, dass** die Netzeinrichtung (4) ein Wireless Access Point ist, vorzugsweise ein WLAN-Router.

4. Verfahren nach einem der Ansprüche 1 bis 3, **dadurch gekennzeichnet, dass** das Endgerät (3) ein mobiles Endgerät ist, vorzugsweise ein Mobilfunktelefon.

5. Verfahren nach einem der Ansprüche 1 bis 4, **dadurch gekennzeichnet, dass** von dem Endgerät (3) über das zweite Kommunikationsnetz (1) eine Nutzerkennung an die Konfigurationseinrichtung (5) übertragen wird, welche vorzugsweise zur Authentifizierung (H) des Endgerätes (3) und/oder des Nutzers des Endgerätes (3) durch die Konfigurationseinrichtung (5) und/oder einer mit der Konfigurationseinrichtung (5) verbundenen weiteren Einrichtung nutzbar ist.

6. Verfahren nach Anspruch 5, **dadurch gekennzeichnet, dass** mittels der Kennung und der Nutzerkennung eine Identifizierung der Netzeinrichtung (4) in dem dritten Kommunikationsnetz (2) ermöglicht wird.

7. Verfahren nach Anspruch 5 oder Anspruch 6, **gekennzeichnet durch** eine Authentifizierung (H) der Nutzerkennung **durch** einen Vergleich der empfangenen Nutzerkennung mit registrierten Kennungen.

8. Verfahren nach einem der Ansprüche 1 bis 7, **dadurch gekennzeichnet, dass** im Rahmen der Konfiguration des Endgerätes (3) ein Zugriffsprofil für den Zugriff auf das erste Kommunikationsnetz (9) unter Verwendung der an das Endgerät (3) übertragenen Konfigurationsdaten erstellt wird.

9. Verfahren nach einem der Ansprüche 1 bis 8, **dadurch gekennzeichnet, dass** die Konfigurationsdaten als Konfigurationsnachricht an das Endgerät (3) übertragen werden.

10. Verfahren nach einem der Ansprüche 1 bis 9, **dadurch gekennzeichnet, dass** die von dem Endgerät (3) an die Konfigurationseinrichtung (5) übertragene Kennung einen Netzwerknamen umfasst.

11. Verfahren nach einem der Ansprüche 1 bis 10, **dadurch gekennzeichnet, dass** die von dem Endgerät (3) an die Konfigurationseinrichtung (5) übertragene Kennung eine Netzeinrichtungsgerätenummer umfasst.

12. Verfahren nach einem der Ansprüche 1 bis 11, **dadurch gekennzeichnet, dass** die Übertragung (B) der Kennung von dem Endgerät (3) über das zweite Kommunikationsnetz (1) an die Konfigurationseinrichtung (5) mittels einer Multimedianachricht erfolgt.

13. Verfahren nach einem der Ansprüche 1 bis 12, **dadurch gekennzeichnet, dass** die Übertragung (B) der Kennung von dem Endgerät (3) über das zweite Kommunikationsnetz (1) an die Konfigurationseinrichtung (5) und/oder die Übertragung (F) der Konfigurationsdaten von der Konfigurationseinrichtung (5) über das zweite Kommunikationsnetz (1) an das Endgerät (3) unter Nutzung einer gesicherten IP-Verbindung erfolgt, wobei die Übertragung (B, F) vorzugsweise unter Verwendung eines Ober einen Browser erfolgenden Dialoges zwischen dem Endgerät (3) und der Konfigurationseinrichtung (5) erfolgt.

14. Konfigurationseinrichtung (5) zum Konfigurieren eines Endgerätes (3) für einen Zugriff auf ein erstes von einer Netzwerkeinrichtung (4) ausgebildetes leitungsloses Kommunikationsnetz (9), wobei das Endgerät über ein zweites Kommunikationsnetz (1) mit der Konfigurationseinrichtung (5) verbindbar ist und die Netzeinrichtung (4)
über ein drittes Kommunikationsnetz (2) mit der Konfigurationseinrichtung (5) verbindbar ist,
**dadurch gekennzeichnet, dass**
die Konfigurationseinrichtung (5) dazu ausgebildet und/oder eingerichtet ist, die folgenden Verfahrensschritte auszuführen:
- Empfangen einer seitens des Endgerätes (3) erfassten Kennung über das zweite Kommunikationsnetz (1) von dem Endgerät (3);
- Aufbau (C) einer Kommunikationsverbindung (6) mit der Netzeinrichtung (4) über das dritte Kommunikationsnetz (2) unter Nutzung der empfangenen Kennung;
- Empfangen von für einen Zugriff mit dem Endgerät (3) auf das erste Kommunikationsnetz (9) erforderlichen Daten von der Netzeinrichtung (4) über die Kommunikationsverbindung (6) mit der Netzeinrichtung (4);
- Erstellen (E) von Konfigurationsdaten unter Nutzung der empfangenen Daten; und
- Übertragen (F) der Konfigurationsdaten an das Endgerät (3) über das zweite Kommunikationsnetz.

15. Konfigurationseinrichtung (5) nach Anspruch 14, **gekennzeichnet durch** Mittel zum Ausführen der seitens der Konfigurationseinrichtung (5) auszuführenden Verfahrensschritte gemäß dem Verfahren nach einem der Ansprüche 1 bis 13.

## Claims

1. A method for configuring a terminal (3) for an access to a first wireless communication network (9) formed by a network equipment (4) with the participation of a configuration device (5),
wherein
the terminal (3) is connectable with the configuration device (5) via a second communication network (1) and
the network equipment (4) is connectable with the configuration device (5) via a third communication network (2),
comprising the following steps:
- gathering (A) an identifier assigned to the network equipment (4) and/or the first communication network (9) by means of the terminal (3), wherein the identifier is usable by the configuration device (5) for identifying the network equipment (4);
- transmitting (B) the recorded identifier from the terminal (3) to the configuration device (5) via the second communication network (1);
- use of the identifier received by the configuration device (5) for establishing (C) a communication connection (6) between the configuration device (5) and the network equipment (4) via the third communication network (2);
- transmitting (D) data, which are required for an access of the terminal (3) to the first communication network (9), from the network equipment (4) to the configuration device (5) via the communication connection (6) between the configuration device (5) and the network equipment (4);
- use of the data received from the configuration device (5) for producing (E) configuration data by means of the configuration device (5);
- transmitting (F) the configuration data from the configuration device (5) to the terminal (3) via the second communication network (1); and
- use of the configuration data for configuring (G) the terminal (3) for an access to the first wireless communication network (9).

2. A method according to claim 1, **characterized in that** the first communication network (9) is designed according to a first telecommunication standard and the second and/or third communication network (1, 2) is designed according to a second telecommunication standard.

3. A method according to claim 1 or claim 2, **characterized in that** the network equipment (4) is a Wireless Access Point, preferably a WLAN router.

4. A method according to one of the claims 1 through 3, **characterized in that** the terminal (3) is a mobile terminal, preferably a mobile phone.

5. A method according to one of the claims 1 to 4, **characterized in that** a user identifier is transmitted from the terminal (3) via the second communication network (1) to the configuration device (5), which user identifier can be used by the configuration device (5) and/or another device which can be connected to the configuration device (5) preferably for authenticating (H) the terminal (3) and/or the user of the terminal (3).

6. A method according to claim 5, **characterized in that** an identification of the network equipment (4) will be enabled by means of the identifier and the user identifier in the third communication network (2).

7. A method according to claim 5 or claim 6, **characterized by** an authentication (H) of the user identifier by means of a comparison of the received user identifier with registered identifiers.

8. A method according to one of the claims 1 to 7, **characterized in that** within the scope of the configuration of the terminal (3), an access profile for the access to the first communication network (9) is established using the configuration data which have been transmitted to the terminal (3).

9. A method according to one of the claims 1 to 8, **characterized in that** the configuration data are transmitted to the terminal (3) as a configuration message.

10. A method according to one of the claims 1 to 9, **characterized in that** the identifier transmitted from the terminal (3) to the configuration device (5) comprises a network name.

11. A method according to one of the claims 1 to 10, **characterized in that** the identifier transmitted from the terminal (3) to the configuration device (5) comprises a network equipment device number.

12. A method according to one of the claims 1 to 11, **characterized in that** the transmission (B) of the identifier from the terminal (3) via the second communication network (1) to the configuration device (5) is realized by means of a multimedia message.

13. A method according to one of the claims 1 to 12, **characterized in that** the transmission (B) of the identifier from the terminal (3) via the second communication network (1) to the configuration device (5) and/or the transmission (F) of the configuration data from the configuration device (5) via the second communication network (1) to the terminal (3) is realized using a secured IP connection, wherein the transmission (B, F) is preferably realized using a dialogue between the terminal (3) and the configuration device (5), which dialogue takes place via a browser.

14. A configuration device (5) for configuring a terminal (3) for an access to a first wireless communication network (9) formed by a network equipment (4), wherein the terminal is connectable with the configuration device (5) via a second communication network (1) and the network equipment (4) is connectable with the configuration device (5) via a third communication network (2),
**characterized in that**
the configuration device (5) is designed and/or adapted to carry out the following process steps:
- receiving an identifier recorded by the terminal (3) from the terminal (3) via the second communication network (1);
- establishing (C) a communication connection (6) with the network equipment (4) via the third communication network (2) using the received identifier;
- receiving data, which are required for an access of the terminal (3) to the first communication network (9), from the network equipment (4) via the communication connection (6) with the network equipment (4);
- compoling (E) configuration data using the received data; and
- transmitting (F) the configuration data to the terminal (3) via the second communication network.

15. A configuration device (5) according to claim 14, **characterized by** means for carrying out the process steps of the method according to one of the claims 1 to 13 to be executed by the configuration device (5).

## Revendications

1. Procédé de configuration d'un terminal (3) pour avoir un accès à un premier réseau de communication (9) sans fil formé par un dispositif de réseau (4) avec la participation d'un dispositif de configuration (5),
dans lequel
le terminal (3) peut être relié au dispositif de configuration (5) via un deuxième réseau de communication (1) et
le dispositif de réseau peut être relié au dispositif de configuration (5) via un troisième réseau de communication (2),
comprenant les étapes suivantes de:
- saisir (A) un identificateur attribué au dispositif de réseau (4) et/ou au premier réseau de communication (9) par le terminal (3), l'identificateur étant utilisable par le dispositif de configuration (5) pour identifier le dispositif de réseau (4);
- transmettre (B) l'identificateur saisi du terminal (3) au dispositif de configuration (5) via le deuxième réseau de communication (1);
- utiliser l'identificateur reçu du dispositif de configuration (5) pour établir (C) une liaison de communication (6) entre le dispositif de configuration (5) et le dispositif de réseau (4) via le troisième réseau de communication (2);
- transmettre (D) des données, dont le terminal (3) a besoin pour avoir un accès au premier réseau de communication (9), du dispositif de réseau (4) au dispositif de configuration (5) via la liaison de communication (6) entre le dispositif de configuration (5) et le dispositif de réseau (4);
- utiliser les données reçues du dispositif de configuration (5) pour créer (E) des données de configuration par moyen du dispositif de configuration (5);
- transmettre (F) les données de configuration du dispositif de configuration (5) au terminal (3) via le deuxième réseau de communication (1); et
- utiliser les données de configuration pour configurer (G) le terminal de sorte qu'il a accès au premier réseau de communication sans fil (9).

2. Procédé selon la revendication 1, **caractérisé en ce que** le premier réseau de communication (9) est configuré selon un premier standard de télécommunication et le deuxième et/ou le troisième réseau de communication (1, 2) est configuré selon un deuxième standard de télécommunication.

3. Procédé selon la revendication 1 ou la revendication 2, **caractérisé en ce que** le dispositif de réseau (4) est un Wireless Access Point, de préférence un routeur WLAN.

4. Procédé selon l'une des revendications 1 à 3, **caractérisé en ce que** le terminal (3) est un terminal mobile, de préférence un téléphone mobile.

5. Procédé selon l'une des revendications 1 à 4, **caractérisé en ce que** le terminal (3) transmet un identificateur d'utilisateur au dispositif de configuration (5) via le deuxième réseau de communication (1), lequel identificateur d'utilisateur peut être utilisé par le dispositif de configuration (5) et/ou un autre dispositif relié au dispositif de configuration (5) de préférence pour authentifier (H) le terminal (3) et/ou l'utilisateur du terminal (3).

6. Procédé selon la revendication 5, **caractérisé en ce qu'**une identification du dispositif de réseau (4) dans le troisième réseau de communication (2) est rendue possible par moyen de l'identificateur et de l'identificateur d'utilisateur.

7. Procédé selon la revendication 5 ou la revendication 6, **caractérisé par** une authentification (H) de l'identificateur d'utilisateur par une comparaison de l'identificateur d'utilisateur reçu avec des identificateurs enregistrés.

8. Procédé selon l'une des revendications 1 à 7, **caractérisé en ce que** dans le cadre de la configuration du terminal (3), un profil d'accès pour avoir accès au premier réseau de communication (9) est créé en utilisant les données de configuration transmises au terminal (3).

9. Procédé selon l'une des revendications 1 à 8, **caractérisé en ce que** les données de configuration sont transmises au terminal (3) sous forme d'un message de configuration.

10. Procédé selon l'une des revendications 1 à 9, **caractérisé en ce que** l'identificateur transmis du terminal (3) au dispositif de configuration (5) comprend un nom de réseau.

11. Procédé selon l'une des revendications 1 à 10, **caractérisé en ce que** l'identificateur transmis du terminal (3) au dispositif de configuration (5) comprend un numéro d'appareil du dispositif de réseau.

12. Procédé selon l'une des revendications 1 à 11, **caractérisé en ce que** la transmission (B) de l'identificateur à partir du terminal (3) au dispositif de configuration (5) via le deuxième réseau de communication (1) se fait par moyen d'un message multimédia.

13. Procédé selon l'une des revendications 1 à 12, **caractérisé en ce que** la transmission (B) de l'identificateur à partir du terminal (3) au dispositif de configuration (5) via le deuxième réseau de communication (1) et/ou la transmission (F) des données de configuration à partir du dispositif de configuration (5) au terminal (3) via le deuxième réseau de communication se fait en utilisant une liaison IP sécurisée, la transmission (B, F) se faisant de préférence en utilisant un dialogue entre le terminal (3) et le dispositif de configuration (5), le dialogue étant réalisé via un navigateur.

14. Dispositif de configuration (5) destiné à configurer un terminal (3) pour avoir un accès à un premier réseau de communication (9) sans fil formé par un dispositif de réseau (4), le terminal pouvant être relié au dispositif de configuration (5) via un deuxième réseau de communication (1) et le dispositif de réseau (4)
pouvant être relié au dispositif de configuration (5) via un troisième réseau de communication (2),
**caractérisé en ce que**
le dispositif de configuration (5) est configuré et/ou adapté à exécuter les étapes de procédé suivantes de:
- recevoir un identificateur saisi par le terminal (3) du terminal (3) via le deuxième réseau de communication (1);
- établir (C) une liaison de communication (6) avec le dispositif de réseau (4) via le troisième réseau de communication (2) en utilisant l'identificateur reçu;
- recevoir des données, dont le terminal (3) a besoin pour avoir un accès au premier réseau de communication (9), du dispositif de réseau (4) via la liaison de communication (6) avec le dispositif de réseau (4);
- créer (E) des données de configuration en utilisant les données reçues; et
- transmettre (F) les données de configuration au terminal (3) via le deuxième réseau de communication.

15. Dispositif de configuration (5) selon la revendication 14, **caractérisé par** des moyens pour exécuter les étapes de procédé du procédé selon l'une des revendications 1 à 13, qui sont à exécuter par le dispositif de configuration (5).
